# EUROPÄISCHE PATENTSCHRIFT

(11) **EP 2 585 333 B1**
(45) Veröffentlichungstag und Bekanntmachung des Hinweises auf die Patenterteilung: **25.02.2015**
(21) Anmeldenummer: 11725337.7
(22) Anmeldetag: 08.06.2011
(51) Int. Cl.: B60K 35/00, G03B 21/00, G09F 9/40, G09F 13/22, G09F 13/08

(54) **SYMBOL-ANZEIGEELEMENT FÜR EINEN FAHRZEUG-INNENRAUM**
SYMBOL DISPLAY ELEMENT FOR A VEHICLE INTERIOR
ÉLÉMENT D'AFFICHAGE DE SYMBOLE POUR UN HABITACLE DE VÉHICULE

(30) Priorität: 23.06.2010 DE 102010024700
(43) Veröffentlichungstag der Anmeldung: 01.05.2013
(73) Patentinhaber: TRW Automotive Electronics & Components GmbH, 78315 Radolfzell (DE)
(72) Erfinder: BACKES, Ulrich, 78315 Radolfzell (DE); KOEHNLEIN, Harald, 78244 Gottmadingen (DE)
(74) Vertreter: Prinz & Partner mbB
(86) Internationale Anmeldenummer: PCT/EP2011/002822
(87) Internationale Veröffentlichungsnummer: WO 2011/160776

(56) Entgegenhaltungen:
- DE-A1-102004 007 802
- DE-U1- 29 511 962
- US-A- 3 244 071
- US-A- 3 331 277

## Beschreibung

Die Erfindung betrifft ein Symbol-Anzeigeelement für einen Fahrzeug-Innenraum, siehe z.B. die US-A-3 244 071.

In einem typischen Fahrzeug-Innenraum werden zahlreiche beleuchtete Symbol-Anzeigeelemente verwendet, um den Insassen Informationen über Betriebszustände von im Fahrzeug eingebauten Komponenten optisch wahrnehmbar zu machen. Verschiedene Betriebszustände einer Komponente können mit entsprechend verschiedenen beleuchteten Symbolen angezeigt werden, die selektiv einzeln aktiviert werden. Beispielsweise können die Frontscheinwerfer eines Fahrzeugs zwischen "abgeblendet" und "aufgeblendet" umgeschaltet werden, und das entsprechende Leuchtsymbol wird aktiviert, um dem Fahrer den Betriebszustand gut sichtbar anzuzeigen. Verschiedene Symbole können allerdings nicht an genau derselben Stelle angezeigt werden, wenn nicht ein Anzeigeelement verwendet wird, das zwischen verschiedenen Symboldarstellungen umschaltbar ist. Umschaltbare Symbol-Anzeigeelemente können mit LCD-Displays verwirklicht werden, die jedoch sehr aufwendig sind.

Es besteht ein bisher nicht befriedigter Bedarf für ein Symbol-Anzeigeelement, das auf derselben Anzeigefläche verschiedene Symbole selektiv einzeln anzeigen kann, ohne aufwendige Technik wie bei LCD-Displays einsetzen zu müssen.

Gemäß der Erfindung wird ein Symbol-Anzeigeelement für einen Fahrzeug-Innenraum vorgeschlagen, das eine durch eine Streuscheibe gebildete Frontabdeckung aufweist. Eine Schattenmaske ist im Lichtweg zwischen der Streuscheibe und mehreren einzeln aktivierbaren Punktlichtquellen angeordnet und weist für jede Punktlichtquelle ein zugeordnetes Symbol auf, das bei Aktivierung der entsprechenden Punktlichtquelle vergrößert auf die Rückseite der Streuscheibe projiziert wird. Mit dieser einfach realisierbaren Ausgestaltung des Anzeigeelements teilen sich die verschiedenen Symbole eine gemeinsame Anzeigefläche auf der Streuscheibe, die als Rückprojektionsschirm wirkt.

Für einen optimalen Darstellungskontrast der verschiedenen Symbole werden bei der bevorzugten Ausführungsform des Anzeigeelements die Lichtwege der einzelnen Punktlichtquellen bis zu den zugeordneten Symbolen auf der Schattenmaske gegen die Lichtwege anderer Punktlichtquellen optisch abgeschirmt, was mit einfachen am Gehäuse des Anzeigeelements innenseitig angeformten Schirmplatten erreicht werden kann. Das Gehäuse weist erfindungsgemäß stirnseitig die Frontabdeckung auf, trägt an seinem gegenüberliegenden Ende eine Leiterplatte, auf der die Punktlichtquellen aufgebaut sind, und haltert zwischen Frontabdeckung und Leiterplatte die Schattenmaske. Diese kann eine durchgehende transparente Platte sein, auf der die Symbole aufgedruckt, aufgesprüht oder durch Heißsiegelprägen aufgebracht sind, oder sie wird aus einzelnen transparenten Teilplatten zusammengesetzt, die mit kundenspezifischen Symbolen in entsprechenden Techniken versehen werden und in das Gehäuse eingeklipst werden.

Weitere Merkmale und Vorteile der Erfindung ergeben sich aus der nachfolgenden Beschreibung einer speziellen Ausführungsform unter Bezugnahme auf die beigefügten Zeichnungen. In den Zeichnungen zeigen:
- Figur 1 eine schematische Schnittansicht einer Ausführungsform eines Symbol-Anzeigeelements für einen Fahrzeug-Innenraum; und
- Figur 2 eine schematische Perspektivansicht zur Veranschaulichung der Funktionsweise des Symbol-Anzeigeelements.

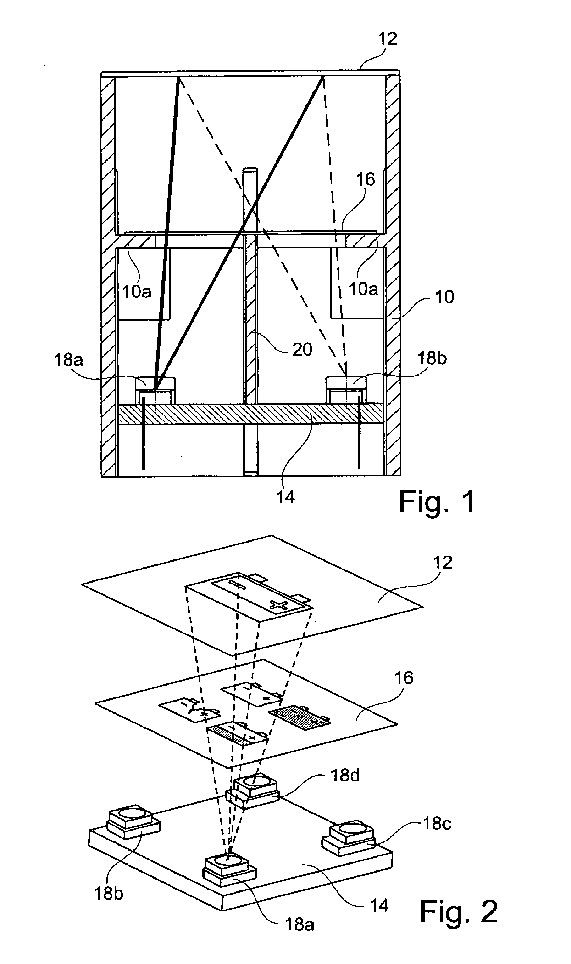

Ein allgemein quaderförmiges Gehäuse 10 umschließt einen Hohlraum, der stirnseitig durch eine Frontabdeckung 12 verschlossen ist, die durch eine Streuscheibe gebildet wird. An dem von der Frontabdeckung 12 abgewandten Ende ist in das Gehäuse 10 eine Leiterplatte 14 eingesetzt. Das Gehäuse 10 bildet innenseitig mit angeformten Wandungen 10a eine Auflage für eine Schattenmaske 16, die durch eine optisch transparente Platte mit darauf aufgebrachten Symbolen gebildet ist. Die Leiterplatte ist bei der gezeigten Ausführungsform quadratisch und ist an jeder Ecke mit einer Punktlichtquelle 18a, 18b (Figur 1) in Form einer Leuchtdiode bestückt. Der Raum zwischen der Schattenmaske 16 und der Leiterplatte 14 ist durch Trennwände 20 in lichtdicht voneinander getrennte Kammern unterteilt. Der Raum zwischen der Schattenmaske 16 und der Frontabdeckung 12 ist hingegen frei und lässt von den Punktlichtquellen 18a, 18b ausgehende Strahlen, welche die Schattenmaske 16 durchqueren, ungehindert auf die Rückseite der Frontabdeckung gelangen, die so einen Rückprojektionsschirm bildet. Die Punktlichtquellen 18a, 18b sind selektiv einzeln einschaltbar. In Figur 1 ist mit durchgezogenen Linien ein von der Punktlichtquelle 18a ausgehendes Lichtbündel dargestellt, das einen zugeordneten Symbolbereich auf der Schattenmaske 16 durchquert und auf die Rückseite der Frontabdeckung 12 projiziert wird. Mit gestrichelten Linien ist ein entsprechender Strahlengang dargestellt, der von der Punktlichtquelle 18b ausgeht und einen zugeordneten Symbolbereich der Schattenmaske 16 durchquert, um auf dieselbe Fläche der Rückseite der Frontabdeckung 12 projiziert zu werden, die alternativ von der Punktlichtquelle 18a beleuchtet wird.

In Figur 2 ist die Leiterplatte 14 als quadratische Grundplatte dargestellt, an deren vier Ecken vier Punktlichtquellen 18a, 18b, 18c, 18d in Form von Leuchtdioden oder anderen Lumineszenzelementen angeordnet sind. Nur die Punktlichtquelle 18a ist aktiviert dargestellt. Der davon ausgehende Strahlengang durchquert ein zugeordnetes Symbol auf der Schattenmaske 16 und wird auf die Rückseite der Frontabdeckung 12 projiziert. Da diese eine Streuscheibe ist, wirkt die beschriebene Anordnung als Rückprojektionsvorrichtung. Die Zuordnung der vier auf der Schattenmaske 16 angeordneten Symbolbereiche zu den Punktlichtquellen 18a bis 18d ist dergestalt, dass jedes der vier Symbole auf derselben Projektionsfläche der Frontabdeckung 12 dargestellt wird.

Die Symbole der Schattenmaske 16 werden auf der transparenten Platte als opake Flächenelemente aufgebracht, insbesondere durch Bedrucken, Heißsiegelprägen oder Aufsprühen.

Es versteht sich, dass die in den Figuren gezeigte Ausgestaltung des Symbol-Anzeigeelements beispielhaft ist, insbesondere hinsichtlich der Anzahl und Anordnung der darstellbaren Symbole sowie des Inhalts der Symbole, die hier vier unterschiedliche Ladezustände der Fahrzeugbatterie veranschaulichen sollen.

## Patentansprüche

1. Symbol-Anzeigeelement für einen Fahrzeug-Innenraum, mit einem Gehäuse (10), das stirnseitig eine durch eine Streuscheibe (12) gebildete Frontabdeckung (12) aufweist und an seinem gegenüberliegenden Ende eine Leiterplatte (14) trägt, auf der eine Mehrzahl von selektiv einzeln aktivierbaren Punktlichtquellen (18) aufgebaut ist, wobei das Gehäuse zwischen Frontabdeckung (12) und Leiterplatte (14) eine Schattenmaske (16) haltert, die im Lichtweg zwischen der Streuscheibe und den Punktlichtquellen angeordnet ist und für jede Punktlichtquelle ein zugeordnetes Symbol aufweist, das bei Aktivierung der entsprechenden Punktlichtquelle vergrößert auf die Rückseite der Streuscheibe projiziert wird, wobei
a) der Raum zwischen der Schattenmaske (16) und der Frontabdeckung (12) frei ist und die von den Punktlichtquellen ausgehenden Strahlen, welche die Schattenmaske durchqueren, ungehindert auf die Rückseite der Frontabdeckung gelangen und
b) die Orte der Punktlichtquellen (18) und der zugeordneten Symbole auf der Schattenmaske (16) so gewählt sind, dass alle Symbole im Wesentlichen auf dieselbe Projektionsfläche der Streuscheibe (12) projiziert werden.

2. Symbol-Anzeigeelement nach Anspruch 1, bei dem die Lichtwege der einzelnen Punktlichtquellen bis zu den zugeordneten Symbolen auf der Schattenmaske gegen die Lichtwege anderer Punktlichtquellen optisch abgeschirmt sind.

3. Symbol-Anzeigeelement nach Anspruch 1 oder 2, bei dem das Gehäuse Schirmwände aufweist, welche die Lichtwege der Punktlichtquellen bis zu der Schattenmaske voneinander abschotten.

4. Symbol-Anzeigeelement nach einem der vorstehenden Ansprüche, bei dem die Punktlichtquellen durch Leuchtdioden gebildet sind.

5. Symbol-Anzeigeelement nach einem der vorstehenden Ansprüche, bei dem die Schattenmaske durch eine optisch transparente Platte gebildet ist, auf der die Symbole aufgebracht sind, insbesondere durch Bedrucken, Heißsiegelprägen oder Aufsprühen.

6. Symbol-Anzeigeelement nach einem der Ansprüche 1 bis 4, bei dem die Schattenmaske aus einzelnen Symbolträgern zusammengesetzt ist, die jeweils durch eine optisch transparente Platte gebildet sind, auf der das Symbol aufgebracht ist, insbesondere durch Bedrucken, Heißsiegelprägen oder Aufsprühen.

7. Symbol-Anzeigeelement nach einem der vorstehenden Ansprüche, bei dem die Punktlichtquellen an den Ecken eines Quadrats angeordnet sind.

## Claims

1. A symbol display element for a vehicle interior, comprising a housing (10) which has on the end face a front cover (12) formed by a diffusing lens (12), and bears at its opposite end a printed circuit board (14) on which a plurality of point light sources (18) is mounted which can be activated separately in a selective manner, wherein the housing supports a shadow mask (16) between the front cover (12) and the printed circuit board (14) and the shadow mask is arranged in the optical path between the diffusing lens and the point light sources and includes for each point light source an associated symbol which is projected in an enlarged manner onto the rear side of the diffusing lens upon activation of the corresponding point light source, wherein
(a) the space between the shadow mask (16) and the front cover (12) is free, and the rays originating from the point light sources and passing through the shadow mask reach the rear side of the front cover without hindrance, and
(b) the positions of the point lights sources (18) and of the associated symbols on the shadow mask (16) are selected such that all symbols are projected substantially onto the same projection surface of the diffusing lens (12).

2. The symbol display element according to claim 1, wherein the optical paths of the individual point light sources up to the associated symbols on the shadow mask are optically screened from the optical paths of other point light sources.

3. The symbol display element according to claim 1 or 2, wherein the housing comprises screening walls which isolate the optical paths of the point light sources from each other up to the shadow mask.

4. The symbol display element according to any of the preceding claims, wherein the point light sources are formed by light emitting diodes.

5. The symbol display element according to any of the preceding claims, wherein the shadow mask is formed by an optically transparent plate onto which the symbols are applied, in particular by printing, heat-sealing embossing or spraying.

6. The symbol display element according to any of claims 1 to 4, wherein the shadow mask is composed of individual symbol supports which are each formed by an optically transparent plate onto which the symbol is applied, in particular by printing, heat-sealing embossing or spraying.

7. The symbol display element according to any of the preceding claims, wherein the point light sources are arranged at the corners of a square.

## Revendications

1. Elément d'affichage de symbole pour un habitacle de véhicule, comportant un boîtier (10) qui présente côté face frontale un recouvrement avant (12) formé par un diffuseur (12) et qui porte à son extrémité opposée une carte de circuits imprimés (14) sur laquelle il est monté une pluralité de sources lumineuses ponctuelles (18) aptes à être activées individuellement de manière sélective, le boîtier retenant entre le recouvrement avant (12) et la carte de circuits imprimés (14) un masque d'ombre (16) qui est agencé sur le chemin optique entre le diffuseur et les sources lumineuses ponctuelles et qui présente pour chaque source lumineuse ponctuelle un symbole associé qui est projeté agrandi sur la face arrière du diffuseur lors de l'activation de la source lumineuse ponctuelle correspondante,
a) l'espace entre le masque d'ombre (16) et le recouvrement avant (12) étant libre, et les rayons partant des sources lumineuses ponctuelles, lesquels traversent le masque d'ombre, parvenant librement sur la face arrière du recouvrement avant, et
b) les endroits des sources lumineuses ponctuelles (18) et des symboles associés sur le masque d'ombre (16) étant choisis de telle sorte que tous les symboles sont projetés sensiblement sur la même surface de projection du diffuseur (12).

2. Elément d'affichage de symbole selon la revendication 1, dans lequel les chemins optiques des sources lumineuses ponctuelles individuelles jusqu'aux symboles associés sur le masque d'ombre sont optiquement protéger contre les chemins optiques d'autres sources lumineuses ponctuelles.

3. Elément d'affichage de symbole selon la revendication 1 ou 2, dans lequel le boîtier présente des parois de protection qui isolent les chemins optiques des sources lumineuses ponctuelles les uns des autres jusqu'au masque d'ombre.

4. Elément d'affichage de symbole selon l'une des revendications précédentes, dans lequel les sources lumineuses ponctuelles sont formées par des diodes électroluminescentes.

5. Elément d'affichage de symbole selon l'une des revendications précédentes, dans lequel le masque d'ombre est formé par une plaque optiquement transparente sur laquelle les symboles sont appliqués, en particulier par impression, par estampage par thermosoudage ou par pulvérisation.

6. Elément d'affichage de symbole selon l'une des revendications 1 à 4, dans lequel le masque d'ombre est composé de supports de symbole individuels chacun formés par une plaque optiquement transparente sur laquelle le symbole est appliqué, en particulier par impression, par estampage par thermosoudage ou par pulvérisation.

7. Elément d'affichage de symbole selon l'une des revendications précédentes, dans lequel les sources lumineuses ponctuelles sont agencées aux coins d'un carré.
